# EUROPÄISCHE PATENTSCHRIFT

(11) **EP 1 254 022 B1**
(45) Veröffentlichungstag und Bekanntmachung des Hinweises auf die Patenterteilung: **28.04.2004**
(21) Anmeldenummer: 01907478.0
(22) Anmeldetag: 23.01.2001
(51) Int. Cl.: B32B 7/04, B32B 27/32

(54) **VERPACKUNG AUS BIAXIAL ORIENTIERTER POLYOLEFINFOLIE**
PACKAGING MATERIAL MADE OF A BIAXIALLY ORIENTED POLYOLEFIN FILM
EMBALLAGE A BASE DE PELLICULE EN POLYOLEFINE A ORIENTATION BIAXIALE

(30) Priorität: 26.01.2000 DE 10003423
(43) Veröffentlichungstag der Anmeldung: 06.11.2002
(73) Patentinhaber: Trespaphan GmbH, 66539 Neunkirchen (DE)
(72) Erfinder: DRIES, Thomas, 55270 Schwabenheim (DE); EISER, Wolfgang, 66822 Lebach (DE)
(74) Vertreter: Luderschmidt, Schüler & Partner GbR
(86) Internationale Anmeldenummer: PCT/EP2001/000696
(87) Internationale Veröffentlichungsnummer: WO 2001/054895

(56) Entgegenhaltungen:
- DE-A- 3 005 051
- DE-A- 19 516 726
- GB-A- 1 384 144

## Beschreibung

Die Erfindung betrifft eine Verpackung aus biaxial orientierter Polyolefinfolie.

Polyolefinfolien finden als Verpackungsfolien breite Anwendung. Der Erfolg dieser Materialien beruht auf den guten optischen und mechanischen Eigenschaften sowie auf der einfachen Verschweißbarkeit der Folien. Neben dem Verschweißen hat das Siegeln von Folien zunehmend an Bedeutung gewonnen. Siegelfähige Folien besitzen eine Deckschicht aus einem Polymeren, das einen niedrigeren Kristallitschmelzpunkt besitzt als das Polymere der Basisschicht. Zum Siegeln werden die Folienlagen übereinandergelegt und nur 10 bis 20 °C unter den Kristallitschmelzpunkt erwärmt, d. h. die Deckschichten werden nicht vollständig aufgeschmolzen. Die erzielte Haftung der Siegelschichten ist wesentlich geringer als beim Verschweißen des gleichen Materials, jedoch für viele Anwendungen ausreichend (Kunststoff-Handbuch, Band IV, Carl Hanser Verlag München, 1969, Seiten 623 bis 640).

Neben der Verwendung von siegelfähigen Schichten ist die Aufbringung von sogenannten Kaltsiegelschichten bekannt. Kaltsiegelschichten werden insbesondere dort verwendet, wo temperaturempfindliches Verpackungsgut, wie z.B. Schokolade, in Folie verpackt wird. Das Aufbringen von Kaltsiegelschichten ist ein zusätzlicher Verarbeitungsschritt, welcher die Kosten für eine Verpackung erheblich verteuert.

Unabhängig von diesen Verpackungstechnologien wie Verschweißen, Siegeln oder Kaltsiegeln wurden in den letzten Jahren Verfahren zur Markierung von polymeren Materialien entwickelt. Derartige Materialien enthalten einen strahlungsempfindlichen Zusatz, welcher unter Einwirkung von Strahlung in bestimmten Wellenlängenbereichen eine Verfärbung des Materials bewirkt Geeignete Zusätze für diese Anwendung sind beispielsweise Laserpigmente.

Darüber hinaus sind im Stand der Technik Verfahren zum Fügen von Bauteilen aus Kunststoffen mittels Laser bekannt, bei welchen die thermische und mechanische Belastung der Bauteile gering ist. Für viele Anwendungen hat sich das Durchstrahlschweißen durchgesetzt. Hierbei durchdringt der Laserstrahl ungehindert ein transparentes Bauteil und trifft auf den laserabsorbierenden Fügepartner. Durch die Einwirkung des Laserstrahls wird der Kunststoff des absorbierenden Partners an der Oberfläche aufgeschmolzen und verbindet sich beim Erkalten mit dem Fügepartner. In diesem Verfahren werden Diodenlaser oder Festkörperlaser mit Wellenlängen im nahen Infrarotbereich eingesetzt.

Die Aufgabe der vorliegenden Erfindung bestand daher darin, eine Verpackung aus Polyolefinfolie zur Verfügung zu stellen, welche die Nachteile der Kaltsiegelbeschichtung vermeidet, aber gleichermaßen zum Verpacken von temperaturempfindliche Produkte geeignet sein soll.

DE 3005051 beschreibt eine mehrschichtige überlackierte Folienbahn, welche eine Schicht aus Kunststoff mit Metallcharakter und eine Papierschicht aufweist. Die innere Seite der Papierschicht ist von einer Kleberschicht bedeckt. Die Kunststoffschicht enthält ein Pigment mit metallischem Glanz, welches vorzugsweise ein Aluminiumpigment ist.

DE 19516726 beschreibt ein Verfahren zum Formen und Verschließen einer Faltschachtel. Hierzu weißt ein Faltschachtelzuschnitt entlang der zu verschweißenden Bereiche eine Kunststoffschicht auf. Diese Kunststoffschichten werden nach dem Faltungsvorgang durch Einstrahlung von IR Strahlung oder Laserstrahlung unter Anwendung von Druck miteinander verschweißt.

Diese Aufgabe wird gelöst durch eine Verpackung aus einer mehrschichtigen orientierten Polyolefinfolie, die eine Basisschicht und mindestens eine erste Deckschicht umfaßt, wobei sich diese erste Deckschicht in Kontakt mit sich selbst oder in Kontakt mit der gegenüberliegenden Oberfläche der Folie oder in Kontakt mit der Oberfläche einer weiteren Folie befindet, dadurch gekennzeichnet, daß die Folie in dieser ersten Deckschicht einen Zusatzstoff enthält, welcher im Wellenlängenbereich eines Lasers eine derartige Absorption aufweist, daß es bei lokaler Bestrahlung der Folie mit diesem Laser zu einer derartigen Temperaturerhöhung im Bereich der Bestrahlung kommt, daß das Polyolefin der ersten Deckschicht, im bestrahlten Bereich erweicht oder aufschmilzt und sich beim Abkühlen mit einer weiteren Schicht verbindet, wobei der Zusatzstoff in einer Menge von 0,01 bis 10 Gew.-%, bezogen auf das Gewicht der ersten Deckschicht, enthalten ist und der mittlere Teilchendurchmesser 0,01 bis 4 µm beträgt.

Die Unteransprüche geben weitere Ausführungsformen der Erfindung an.

Eine weitere Aufgabe der vorliegenden Erfindung bestand darin eine vorteilhafte Verpackung aus einem Behältnis mit Deckel anzugeben.

Diese Aufgabe wird gelöst durch eine Verpackung aus einer mehrschichtigen orientierten Polyolefinfolie, die eine Basisschicht und mindestens eine erste Deckschicht umfaßt, wobei die Polyolefinfolie in der ersten Deckschicht einen Zusatzstoff enthält, welcher im Wellenlängenbereich von Lasern eine derartige Absorption aufweist, daß es bei lokaler Bestrahlung der Folie mit einem Laser zu einer derartigen Temperaturerhöhung im Bereich der Bestrahlung kommt, daß das Polyolefin der ersten Deckschicht, in diesem im bestrahlten Bereich erweicht oder aufschmilzt und sich beim Abkühlen mit einer weiteren Schicht verbindet, wobei der Zusatzstoff in einer Menge von 0,01 bis 10 Gew.-%, bezogen auf das Gewicht der ersten Deckschicht, enthalten ist und der mittlere Teilchendurchmesser 0,01 bis 4 µm beträgt.

Die Deckschicht der Folie enthält neben dem laserabsorbierenden Pigment im allgemeinen mindestens 80 Gew.-%, vorzugsweise 85 bis <100 Gew.-%, insbesondere 90 bis 98 Gew.-%, jeweils bezogen auf die Schicht, eines Polyolefins.

Beispiele für geeignete olefinische Polymere der Deckschicht sind
Propylenhomopolymere
Ethylenhomopolymere
Copolymere von
Ethylen und Propylen oder
Ethylen und Butylen-1 oder
Propylen und Butylen-1 oder
Terpolymere von
Ethylen und Propylen und Butylen-1 oder
eine Mischung oder ein Blend aus zwei oder mehreren der genannten Homo-, Co- und Terpolymeren,
wobei insbesondere
statistische Ethylen-Propylen-Copolymere mit
einem Ethylengehalt von 1 bis 10 Gew.-%, bevorzugt 2,5 bis 8 Gew.-%, oder
statistische Propylen-Butylen-1-Copolymere mit
einem Butylengehalt von 2 bis 25 Gew.-%, bevorzugt 4 bis 20 Gew.-%,
jeweils bezogen auf das Gesamtgewicht des Copolymeren, oder
statistische Ethylen-Propylen-Butylen-1-Terpolymere mit
einem Ethylengehalt von 1 bis 10 Gew.-%, bevorzugt 2 bis 6 Gew.-%, und einem Butylen-1-Gehalt von 2 bis 20 Gew.-%, bevorzugt 4 bis 20 Gew.-%, jeweils bezogen auf das Gesamtgewicht des Terpolymeren, oder
ein Blend aus einem Ethylen-Propylen-Butylen-1-Terpolymeren und einem Propylen-Butylen-1-Copolymeren
mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,
bevorzugt sind.

Die in der Deckschicht eingesetzten vorstehend beschriebenen Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230 °C und einer Kraft von 21,6 N (DIN 53 735) gemessen.

Die in der Deckschicht eingesetzten Propylenhomopolymeren weisen im allgemeinen einen Schmelzflußindex von 1,5 bis 30 g/10 min, vorzugsweise von 3 bis 15 g/10 min, auf. Der Schmelzpunkt der Homopolymeren liegt im Bereich von 150 bis 170°C, vorzugsweise 155 bis 165°C. Bevorzugt sind isotaktische Homopolymere deren Isotaktizität größer 92% ist, vorzugsweise im Bereich von 94 bis 98% liegt. Der n-heptan lösliche Anteil der isotaktischen Propylenhomopolymeren beträgt weniger als 10 Gew.-%, vorzugsweise 1 bis 8 Gew.-% bezogen auf das Gewicht des Homopolymeren. Alle vorstehend angegebenen Schmelzflußindices werden bei 230 °C und einer Kraft von 21,6 N (DIN 53 735) gemessen.

Gegebenenfalls können der/den Deckschicht/en übliche Additive wie Antistatika, Neutralisationsmittel, Gleitmittel und/oder Stabilisatoren, sowie gegebenenfalls zusätzlich Antiblockmittel in jeweils wirksamen Mengen zugesetzt werden.

Es ist erfindungswesentlich, daß die absorbierende Deckschicht der Folie einen Zusatzstoff enthält, welcher Strahlung im Wellenlängenbereich von Lasern absorbiert. Derartige Zusatzstoffe werden im Rahmen der vorliegenden Erfindung nachstehend Pigmente oder Laserpigmente genannt.

Die Einarbeitung derartiger Laserpigmente in die Deckschicht der Folie führt bei Bestrahlung der Folie zur Absorption der Strahlung, d.h. zu einer Aufnahme von Energie. Es ist im Stand der Technik bekannt, daß der Laserstrahl bei passender Wellenlänge eine sichtbare Spur in Form einer weißen oder gefärbten Linie im pigmentierten Kunststoff hinterläßt. Dieser Effekt wird zu Markierung von Kunststoffbauteilen und Kunststoffolien mittels Laser genutzt. Im Rahmen der vorliegenden Erfindung wurde nun gefunden, daß die Bestrahlung von aufeinanderliegenden Folien mittels Laserstrahl eine feste Verbindung zwischen den beiden Folienlagen erzeugt, ähnlich einer Siegel- oder Schweißnaht, wenn mindestens eine der beiden Folien eine laserpigmenthaltige Deckschicht aufweist und diese laserpigmenthaltige Schicht der zweiten Folien zugewandt ist, so daß sich die pigmentierte Deckschicht in Kontakt mit der zweiten Folienlage befindet. Dabei wurde gefunden, daß es besonders vorteilhaft für die Erzeugung einer Siegelnaht ist, wenn beide in Kontakt befindlichen Deckschichten ein entsprechendes, vorzugsweise das gleiche absorbierende Pigment enthalten.

Überraschenderweise durchdringt der Laserstrahl die übrigen Schichten der Folie ohne dort optische Spuren, wie man sie von der Lasermarkierung kennt, und ohne sonstige Schäden zu hinterlassen. Es war unerwartet, daß die Laserabsorption so ausgeprägt sein würde, daß Folie genügend Energie für eine Erweichung oder Erwärmung der Deckschicht absorbiert. Es war insbesondere fraglich, ob die Absolutmenge an Laserpigmenten in der dünnen Deckschicht ausreichend sein würde, um ein gleichmäßiges Aufschmelzen der Deckschicht durch Absorption zu ermöglichen. Gleichzeitig zeigte sich, daß die Erwärmung oder das Aufschmelzen der Deckschicht sehr lokal auf den bestrahlten Bereich begrenzt bleibt. Dadurch ist es möglich für die Herstellung einer Verpackung eine gelaserte Siegelnaht gezielt dort anzubringen, wo diese Naht gewünscht ist.

Vorteilhafterweise wird eine thermische Belastung des verpackten Gutes durch den Laserstrahl hierbei vermieden. Die neue Technologie ist daher geeignet bekannte Kaltsiegelbeschichtungen zur Verpackung von temperaturempfindlichen Gütern zu ersetzen.

Die laserpigmenthaltige Deckschicht kann sowohl auf einer an sich bekannten opaken als auch auf einer transparenten Folien, bzw. deren Basis-oder deren Zwischenschicht aufgebracht werden. Für opake bzw. weiße Folien war es insbesondere überraschend, daß die Füllstoffe der übrigen Schichten, die der Opazifizierung bzw. Weißfärbung der Folie dienen, die Absorption der Laserstrahlung in der pigmentierten Deckschicht und die Erwärmung der laserpigmenthaltigen Deckschicht nicht behindern. Die Absorption in den füllstoff- und/oder pigmenthaltigen Schichten ist so gering, bzw. tritt nicht auf, daß keine Beeinträchtigungen der Lasersiegelung oder der Folienintegrität oder der sonstigen Folieeigenschaften durch den Laserstrahl festgestellt wurden.

Laserpigmente sind im Sinne der vorliegenden Erfindung unverträgliche Teilchen, die gegenüber dem Matrixpolymeren inert sind und im wesentlichen nicht zur Vakuolenbildung beim Verstrecken führen. Die mittlere Teilchengröße der Laserpigmente liegt im allgemeinen in einem Bereich von 0,01 bis 4µm, vorzugsweise im Bereich von 0,1 bis 2µm, insbesondere von 0,1 bis 1µm. Die Deckschicht enthält Laserpigment im allgemeinen in einer Menge von 0,01 bis 10 Gew.-%, vorzugsweise 0,5 bis 5 Gew.-%, insbesondere 0,8 bis 3 Gew.-%, bezogen auf das Gewicht der Deckschicht Ist die Konzentration der Laserpigmente zu niedrig, so findet nur eine mäßige Absorption des Laserstrahls statt, was eine schlechte Siegelfestigkeit zur Folge hat. Eine hohe Konzentration an Laserpigmenten erzielt hinsichtlich der Laserabsorption keine zusätzlichen Wirkungen. Bei hohen Konzentrationen an Bunt-, Metall- und Schwarzpigmenten tritt ein Farbeffekt (Graueffekt) auf, welcher nachteilhaft sein kann, aber für manche Anwendungszwecke gegebenenfalls erwünscht ist.

Als Laserpigmente finden vorzugsweise Metallpigmente wie Aluminium- oder Kupfer- oder Zinnpigmente oder Kupferlegierungen wie z. B. Kupfer-Zink- oder Kupfer-Zinn-Legierungen sowie Schwarz- und Buntpigmente insbesondere Ruß oder Graphit, Eisenoxide, Rutilmischphasen, Ultramarine, Spinelle und Zirkonsilikate Verwendung. Unter den genannten sind Aluminiumpigmente, Kupfer-ZinkLegierungen, sowie Ruß und Graphit besonders bevorzugt. Es hat sich herausgestellt, daß im Falle von Ruß ein Gehalt zwischen 0,1 und 1,0 Gew.-%, im Falle von Aluminium-Pigmenten ein Gehalt von 0,5 bis 1,5 Gew.-% und im Falle von Kupferlegierungen ein Gehalt von 0,5 bis 3,0 Gew.-%, vorzugsweise 1 bis 2 Gew.-% bezogen auf das Gewicht der Deckschicht besonders vorteilhaft sind.

Die vorstehend genannten laserabsorbierenden Metall-, Schwarz- oder Buntpigmente können gegebenenfalls im Gemisch mit Metalloxiden wie Weißpigmente, beispielsweise Titandioxid, Aluminiumoxid, Siliciumdioxide, entsprechenden Metallhydroxiden und Metalloxidhydraten, sowie Carbonaten und Silikaten, wie beispielsweise Calciumcarbonat, Aluminiumsilikat (Kaolinton), Magnesiumsilikat (Talkum) oder Glimmer eingesetzt werden.

Die Pigmentgemische sind vorteilhaft, da sie zum Einen ein breites Absorptionspektrum, besonders im Wellenlängenbereich der verwendeten Laser aufweisen. Zum Anderen wird das hohe Absorptionsvermögen der laserabsorbierenden Metall-, Schwarz- oder Buntpigmente genutzt und gleichzeitig wird die Einfärbungen durch diese laserabsorbierenden Pigmente durch entsprechende Weißpigmente wieder aufgehellt. Dabei intensiviert die lichtstreuende Wirkung dieser Weißpigmente die Absorptionseigenschaften der Metall-, Schwarz- und Buntpigmente und begünstigt die Ausbildung des Wärmestaus in der Deckschicht.

Das Mischungsverhältnis von Weißpigmenten und Schwarz-, Metall- bzw. Buntpigmenten kann in weiten Bereichen variieren und ermöglicht die Einstellung eines optimalen Absorptionsbereiches je nach dem verwendeten Laser. Daneben ermöglichen die Mischungen die Einstellung des gewünschten Farbtons der Folie. Gegebenenfalls kann das Gemisch zu einem System aus mehreren Komponenten ausgeweitet werden. Beispielsweise liegt das Verhältnis von Weißpigment zu Schwarz-, Metall- bzw. Buntpigmenten in einem Bereich von 5:1 bis 1:5, wobei TiO₂ in den Mischungen als aufhellende Weißpigment bevorzugt eingesetzt wird.

Die Pigmentgemische werden durch geeignete Verfahren homogen vermengt, beispielsweise durch Kugelmahlen. Hierbei kann gleichzeitig die geeignete mittlere Teilchengröße und die geeignete Verteitungsbreite der Teilchengröße eingestellt werden.

Des weiteren können die Pigmente oder die Pigmentgemische beschichtet werden, um beispielsweise eine verbesserte Haftung zur Polymermatrix zu erzeugen und Abrisse und Vakuolenbildung, wie man sie von vakuoleninitierenden Teilchen kennt, beim Verstrecken wirksam zu verhindem. Insbesondere für die Metallpigmente wie z.B. Aluminiumpulver ist eine Beschichtung, beispielsweise mit Harten oder Wachsen vorteilhaft. Hierdurch wird auch unerwünschte Staubbildung, die gesundheitsschädlich und explosionsgefährlich sein kann, vermieden. Zusätzlich verbessern diese Wachs-Beschichtungen die Dispergierbarkeit der Pigmente im Polymeren (Deagglomerierung) und die gute Dosierbarkeit der Pigmente bei der Masterbatchherstellung. In der Regel sind handelsübliche Metall-Pigmente bereits mit derartigen Beschichtungen aus Wachsen und/oder Harzen ausgerüstet. Verfahren zur Herstellung solcher Pigment-Beschichtungen sind im Stand der Technik bekannt. Hierbei werden die Pigmente werden durch diese niedrigviskosen Wachse oder Harze benetzt und gegebenenfalls durchfeuchtet, was für die Dispergierbarkeit von Vorteil ist.

Die Pigmente können einen kugel- oder säulenförmigen bzw. einen blättchenförmigen Habitus haben. Die Größe, Geometrie und Orientierung der Teilchen kann gegebenenfalls einen Einfluß auf das Absorptionsverhalten gegenüber Laserstrahlen haben.

Die erfindungsgemäße Polyolefinfolie umfaßt in einer bevorzugten Ausführungsform eine weitere zweite Deckschicht aus Polymeren aus Olefinen mit 2 bis 10 Kohlenstoffatomen, welche auf der Seite aufgebracht ist, die der laserpigmenthaltigen Schicht gegenüber liegt. Diese zweite Deckschicht ist in einer bevorzugten Ausführungsform so zusammengesetzt, daß sie im wesentlichen keine Strahlung im Wellenlängenbereich der zur Siegelung verwendeten Laser absorbiert. Zur Herstellung der erfindungsgemäßen Verpackung ist es wesentlich, daß der Laserstrahl bis zur pigmentierten Schicht durchdringt, so daß dort eine hinreichende Absorption erfolgen kann.

Beispiele für olefinische Polymere der zweiten Deckschicht sind
Propylenhomopolymere
ein Copolymer von
Ethylen und Propylen oder
Ethylen und Butylen-1 oder
Propylen und Butylen-1 oder
ein Terpolymer von
Ethylen und Propylen und Butylen-1 oder
eine Mischung oder ein Blend aus zwei oder mehreren der genannten Homo-, Co- und Terpolymeren
wobei insbesondere die vorstehend für die pigmentierte Deckschicht bevorzugten Polymeren auch für die zweite Deckschicht bevorzugt sind. Zusätzlich sind auch Polyethylene wie HDPE, MDPE oder LDPE, gegebenenfalls gemischt mit den Propylenpolymeren für die zweite Deckschicht geeignet.

Die in der zweiten Deckschicht eingesetzten vorstehend beschriebenen Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Gegebenenfalls können der zweiten Deckschicht in an sich bekannter Weise Additive wie Antistatika, Neutralisationsmittel, Gleitmittel und/oder Stabilisatoren, sowie gegebenenfalls zusätzlich Antiblockmittel in jeweils wirksamen Mengen zugesetzt werden.

In einer weiteren Ausführungsform kann auch die zweite Deckschicht ein Pigment enthalten, welches im Wellenlängenbereich von Laserstrahlung absorbiert. In einer solchen Ausführungsform ist es jedoch wesentlich, daß diese Laserpigmente der zweiten Deckschicht in einem anderen Wellenlängenbereich als das Laserpigment der gegenüberliegenden Deckschicht absorbieren. Eine derartige Folie kann besonders vorteilhaft in kombinierten Verfahren eingesetzt werden, bei welchen einerseits mittels eines Lasers eine Siegelnaht erzeugt wird und zusätzlich mittels eines zweiten Lasers andere Verarbeitungsschritte, wie Laserschneiden, Lasermarkierung und/oder Laserperforierung angewendet werden. In derartigen verfahren werden Laser eingesetzt, welche unterschiedliche Wellenlängen aufweisen.

Die Basisschicht der Mehrschichtfolie enthält im wesentlichen ein Polyolefin, vorzugsweise ein Propylenpolymer, und gegebenenfalls opak machende Füllstoffe sowie gegebenfalls weitere Additive in jeweils wirksamen Mengen. Im allgemeinen enthält die Basisschicht mindestens 50 Gew.-%, vorzugsweise 60 bis 99 Gew.-%, insbesondere 70 bis 98 Gew.-%, des Polyolefins, jeweils bezogen auf das Gewicht der Schicht.

Als Polyolefine sind Propylenpolymere bevorzugt. Diese Propylenpolymeren enthalten 90 bis 100 Gew.-%, vorzugsweise 95 bis 100 Gew.-%, insbesondere 98 bis 100 Gew.-%, Propyleneinheiten und besitzen einen Schmelzpunkt von 120 °C oder höher, vorzugsweise 150 bis 170 °C, und im allgemeinen einen Schmelzflußindex von 0,5 bis 8 g/10 min, vorzugsweise 2 bis 5 g/10 min, bei 230 °C und einer Kraft von 21,6 N (DIN 53735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit C₄-C₈-α-Olefinen mit einem α-Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Kernschicht dar, wobei isotaktisches Propylenhomopolymer besonders bevorzugt ist. Die angegebenen Gewichtsprozente beziehen sich auf das jeweilige Polymer.

Des weiteren ist eine Mischung aus den genannten Propylenhomo- und/oder - copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE, VLDPE und LLDPE, wobei der Anteil dieser Polyolefine jeweils 15 Gew.-%, bezogen auf die Polymermischung, nicht übersteigt.

Für opake Ausführungsformen enthält die opake Basisschicht der Folie Füllstoffe in einer Menge von maximal 40 Gew.-%, vorzugsweise 1 bis 30 Gew.-%, insbesondere 2 bis 20 Gew.-%, bezogen auf das Gewicht der opaken Schicht. Füllstoffe sind im Sinne der vorliegenden Erfindung Pigmente und/oder vakuoleniniziierende Teilchen.

Pigmente der Basisschicht sind im Sinne der vorliegenden Erfindung unverträgliche Teilchen, die im wesentlichen nicht zur Vakuolenbildung beim Verstrecken der Folie führen und im allgemeinen einen mittleren Teilchendurchmesser im Bereich von 0,01 bis maximal 1 µm aufweisen. Die Basisschicht enthält Pigmente im allgemeinen in einer Menge von 0,5 bis 10 Gew.-%, vorzugsweise 1 bis 8 Gew.-%. Übliche Pigmente sind z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wieTitandioxid, Calciumcarbonat, Siliciumdioxid und Bariumsulfat bevorzugt eingesetzt werden.

"Vakuoleniniziierende Füllstoffe" sind feste Teilchen die mit der Polymermatrix unverträglich sind und beim Verstrecken der Folien zur Bildung von vakuolenartigen Hohlräumen führen. In der Regel haben die vakuoleniniziierenden Füllstoffe eine Mindestgröße von 1 µm, im allgemeinen beträgt der mittlere Teilchendurchmesser der Teilchen 1 bis 6 µm. Vakuoleniniziierende Füllstoffe sind in einer Menge von 0,5 bis 25 Gew.-%. vorzugsweise 1 bis 15 Gew.-%, enthalten. Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden.

Als organische Füllstoffe kommen die üblicherweise verwendeten, mit dem Polymeren der Basisschicht unverträglichen Polymeren in Frage, insbesondere solche wie HDPE, Copolymere von cyclischen Olefinen wie Norbomen oder Tetracyclododecen mit Ethylen oder Propen (COC), Polyester, Polystyrole, Polyamide, halogenierte organische Polymere, wobei Polyester wie beispielsweise Polybutylenterephthalate und Cycloolefincopolymere bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Die erfindungsgemäße Folie umfaßt mindestens eine Deckschicht, welche Laserpigment enthält. Vorzugsweise ist die Folie insgesamt drei-, vier oder fünfschichtig aufgebaut. Vorzugsweise sind alle anderen Schichten weitestgehend durchlässig für die angewendete Laserstrahlung.

Die Dicke der ersten laserpigmenthaltigen Deckschicht/en ist im allgemeinen größer als 0,1 µm und liegt vorzugsweise im Bereich von 0,3 bis 6 µm. Die zweite gegenüberliegende Deckschicht kann gleich oder verschieden dick sein. Ihre Dicke liegt vorzugsweise im Bereich von 0,3 bis 3 µm.

Die Zwischenschicht/en kann/können aus den für die Basisschicht beschriebenen olefinischen Polymeren bestehen. Die Zwischenschicht/en kann/können die für die einzelnen Schichten beschriebenen üblichen Additive wie Antistatika, Neutralisationsmittel, Gleitmittel und/oder Stabilisatoren, sowie gegebenenfalls Antiblockmittel, enthalten. Die Dicke der Zwischenschicht/en ist größer als 0,3 µm und liegt vorzugsweise im Bereich von 1,0 bis 15 µm, insbesondere 1,5 bis 10 µm.

Die Gesamtdicke der erfindungsgemäßen Polyolefinfolie kann innerhalb weiter Grenzen variieren und richtet sich nach dem beabsichtigten Einsatz. Sie beträgt vorzugsweise 4 bis 100 µm, insbesondere 5 bis 80 µm, vorzugsweise 10 bis 50 µm, wobei die Basisschicht im allgemeinen etwa 40 bis 100 % der Gesamtfoliendicke ausmacht.

Die Erfindung betrifft weiterhin ein Verfahren zur Herstellung der erfindungsgemäßen Polyolefinfolie nach dem an sich bekannten Coextrusionsverfahren, nach dem Flachfolien oder Blasfolienverfahren.

Im Rahmen des Flachfolienverfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend gestreckt (orientiert), die gestreckte Folie thermofixiert und gegebenenfalls an der zur Behandlung vorgesehenen Oberflächenschicht corona- oder flammbehandelt wird.

Eine biaxiale Streckung (Orientierung) wird sequentiell oder simultan durchgeführt. Die aufeinanderfolgende biaxiale Streckung, bei der zuerst längs (in Maschinenrichtung) und dann quer (senkrecht zur Maschinenrichtung) gestreckt wird, ist bevorzugt. Die simultane Streckung kann im Flachfolienverfahren, beispielsweise mittels LISIM® Technologie oder im Blasverfahren ausgeführt werden. Die weitere Beschreibung der Folienherstellung erfolgt am Beispiel einer Flachfolienextrusion mit anschließender sequentialer Streckung.

Zunächst wird, bzw. werden das Polymere bzw. die Polymermischung der einzelnen Schichten in einem Extruder komprimiert und verflüssigt, wobei die Laserpigmente und andere gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen bei einer Temperatur von 10 bis 100 °C, vorzugsweise 20 bis 50 °C abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstrekungsverhältnisse liegen im Bereich von 4 bis 8 vorzugsweise 5 bis 6. Die Querstreckverhältnisse liegen im Bereich von 5 bis 10, vorzugsweise 7 bis 9. Die Längsstreckung erfolgt vorzugsweise bei 80 bis 150 °C und die Querstreckung vorzugsweise bei 120 bis 170 °C.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Gegebenenfalls wird/werden nach der biaxialen Streckung eine oder beide Oberfläche/n der Folie nach einer der bekannten Methoden corona- oder flammbehandelt. Die Behandlungsintensität liegt im allgemeinen im Bereich von 37 bis 50 mN/m, vorzugsweise 39 bis 45 mN/m. Die Oberflächenbehandlung der Folie wird hier nachstehendam Beispiel der Coronabehandlung beschrieben.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Zur Herstellung der erfindungsgemäßen Verpackung werden die vorstehend beschriebenen Folien beispielsweise so verarbeitet, daß die beiden ersten pigmentierten Deckschichten der Folie oder die erste pigmentierte Deckschicht und die zweite Deckschicht aufeinander zu liegen kommen. Bei der anschließenden Bestrahlung mittels Laser durchdringt der Laserstrahl die übrigen Schichten der Folie bis er auf die in Kontakt befindlichen Deckschichten trifft, von denen eine oder beide pigmentiert sind. In dieser oder diesen Deckschicht/en wird auf Grund der eingearbeiteten Pigmente die Strahlung absorbiert, so daß es zu einer Erwärmung, ähnlich wie bei der Anwendung von Heißsiegelbacken, kommt. Bei entsprechender Führung der Folienbahnen oder entsprechender Führung des Laserstrahls wird so eine Naht erzeugt, ähnlich einer Siegelnaht, die geeignet ist die Verpackung zu verschließen.

Zur Erzeugung des Laserstrahls sind handelsübliche Nd:YAG-, Dioden-, Eximer- oder CO₂-Laser geeignet, deren Leistung der Art des Polymeren, den Verarbeitungsgeschwindigkeiten und der Art des Pigments in der Deckschicht angepaßt wird. Dabei sind grundsätzlich sowohl gepulste als auch kontinuierlich betriebene Laser einsetzbar.Vor allem Diodenlaser sind wegen ihrer Robustheit und Wellenlänge im nahen Infrarot besonders günstig. Die Breite der zu versiegelnden Bereiche kann durch Variation des Laserfokus eingestellt werden. Entsprechend ist eine Anpassung der Energiedichte des Lasers notwendig. Der erzeugte Laserstrahl wird durch Aperturblenden und mittels geeigneter Optik auf die zu versiegelnde Folie fokussiert. Durch entsprechende Blenden ist es möglich parallel verlaufende Laserstrahlen zu erzeugen, um in einem Arbeitsgang mehrer Schweiß- und Siegelnähte anzubringen. Gegebenfalls ist es auch möglich hierbei weitere Verarbeitungsschritte wie beispielsweise Schneiden und Perforieren in diesen Arbeitsgang zu integrieren.

Überraschenderweise hat sich gezeigt, daß die Wechselwirkung zwischen Laser und Folie derart gesteuert werden kann, daß einerseits der Laserstrahl nicht bereits in der Basisschicht absorbiert wird, sondern durch die übrigen Schichten in der gewünschten Weise ungehindert durchdringt, aber andererseits der Absorptionsquerschnitt in der entsprechenden Deckschicht groß genug ist, um ein Aufschmelzen der Deckschicht zu bewirken und so eine Siegeinaht zu erzeugen. Dabei ist der Absorptionsquerschnitt überraschenderweise groß genug, daß das verpackte Gut, insbesondere auch temperaturempfindliches Gut durch den Laserstrahl nicht geschädigt wird.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Mittlere Teilchengröße

Die mittlere Teilchengröße wurde mittels Bildanalyse ermittelt. Hierfür wird eine Probe in Wasser zur Vereinzelung der Teilchen dispergiert und auf einen Glasträger aufgebracht. Anschließend wird die Probe getrocknet und unter dem Rasterelektronenmikroskop untersucht Hierfür werden durch eine geeignete Einstellung von Helligkeit und Kontrast die einzelnen Teilchen als Grauwertabbildung sichtbar gemacht Über eine Fläche von 10 mm² wird die jeweilige Fläche der vereinzelten Teilchen gemessen und der Teilchendurchmesser als Durchmesser eines flächengleichen Kreises ausgegeben. Diese Meßwerte werden nach Größenbereichen klassiert und geben die Verteilung der Teilchengröße an. Der mittlere Teilchendurchmesser wird als Mittelwert der Verteilungskurve bestimmt.

### Schmelzpunkt

DSC-Messung, Maximum der Schmelzkurve, Aufheizgeschwindigkeit 20 °C/min.

Die Erfindung wird nachstehend durch Ausführungsbeispiele erläutert.

### Vergleichsbeispiel 1

Es wurde durch Coextrusion und anschließende stufenweise Orientierung in Längs- und Querrichtung eine opake fünfschichtige Folie mit assymmetrischem Aufbau und mit einer Gesamtdicke von 33 µm hergestellt. Die Deckschicht A hatte eine Dicke von 1,2 µm und die darunter liegende Zwischenschicht B eine Dicke von 3,5 µm. Die Deckschicht E hatte eine Dicke von 0,5 µm und die darunter liegende Zwischenschicht D eine Dicke von 0,1 µm. Die Schichten waren im einzelnen wie folgt zusammengesetzt:
Basisschicht:

| | |
|---|---|
| 87,0 Gew.-% | isotaktisches Propylenhomopolymer mit einem Schmelzpunkt von 159 °C und einem Schmelzflußindex von 3,4 g/10min |
| 9,0 Gew.-% | Kreide Masterbatch (Omyalite 90T) aus 28 Gew.-% Propylenhomopolymer und 72 Gew.-% CaCO₃ |

Zwischenschichten B und D

| | |
|---|---|
| 100 Gew.-% | isotaktisches Propylenhomopolymer mit einem Schmelzpunkt von 150 °C und einem Schmelzflußindex von 3,4 g/10min |

Deckschicht A

| | |
|---|---|
| 100 Gew.-%: | statistisches C₂C₃-Copolymer mit 5 Gew.-% Ethylen und einem Kristallitschmelzpunkt von 125°C und einem Schmelzflußindex von 6,5 g/10 |

Deckschicht E:

| | |
|---|---|
| 98,8 Gew.-% | statistische Ethylen-Propylen-Butylen-Terpolymer mit einem Ethylengehalt von 3 Gew.-% und einem Butylengehalt von 7 Gew.-% (Rest Propylen) und einem Kristallitschmelzpunkt von und einem Schmelzflußindex von |

Die Herstellungsbedingungen in den einzelnen Verfahrensschritten waren:

| | | | |
|---|---|---|---|
| Extrusion | Temperaturen | Basisschicht | 260 °C |
| | | Zwischenschichten | 255 °C |
| | | Deckschichten | 240 °C |
| | Temperatur der Abzugswalze | | 20 °C |
| Längsstreckung | Temperatur | | 110 °C |
| | Längsstreckverhältnis | | 5,5 |
| Querstreckung | Temperatur | | 160 °C |
| | Querstreckverhältnis | | 9 |
| Fixierung | Temperatur | | 150 °C |
| | Konvergenz | | 5 % |

### Beispiel 1

Es wurde eine Folie wie in Vergleichsbeispiel 1 beschrieben hergestellt. Im Unterschied zu Vergleichsbeispiel 1 enthielt die Folie 0,6 Gew.-%, bezogen auf das Gewicht der Schicht, Ruß in der Deckschicht E. Die übrige Zusammensetzung und die Herstellbedingungen wurden gegenüber Vergleichsbeispiel 1 nicht geändert.

### Beispiel 2

Es wurde eine Folie wie in Vergleichsbeispiel 1 beschrieben hergestellt. Im Unterschied zu Vergleichsbeispiel 1 enthielt die Deckschicht E jetzt ein Gemisch aus Ruß und Rutil (TiO₂) im Verhältnis (Gewichtsverhältnis) 1:1. Der Gesamtgehalt an Ruß und Rutil in der Deckschicht E betrug 0,6 Gew.-% bezogen auf das Gewicht der Deckschicht E. Die übrige Zusammensetzung und die Herstellbedingungen wurden gegenüber Vergleichsbeispiel 1 nicht geändert.

### Beispiel 3

Es wurde eine Folie wie in Vergleichsbeispiel 1 beschrieben hergestellt. Im Unterschied zu Vergleichsbeispiel 1 enthielt die Deckschicht E jetzt 0,8 Gew.-% Silberpigment, bezogen auf das Gewicht der Schicht, das aus Aluminiumplättchen besteht. Die übrige Zusammensetzung und die Herstellbedingungen wurden gegenüber Vergleichsbeispiel 1 nicht geändert.

### Vergleichsbeispiel 2

Es wurde eine Folie wie in Vergleichsbeispiel 1 beschrieben hergestellt. Im Unterschied zu Vergleichsbeispiel 1 enthielt die Folie 2,5 Gew.-%, bezogen auf das Gewicht der Schicht, feine Kreide (Socal) in der Deckschicht E. Die übrige Zusammensetzung und die Herstellbedingungen wurden gegenüber Vergleichsbeispiel 1 nicht geändert.

### Vergleichsbeispiel 3

Es wurde eine Folie wie in Vergleichsbeispiel 1 beschrieben hergestellt. Im Unterschied zu Vergleichsbeispiel 1 enthielt die Folie 2,5 Gew.-%, bezogen auf das Gewicht der Schicht, einen Feldspat (Minex) in der Deckschicht E. Die übrige Zusammensetzung und die Herstellbedingungen wurden gegenüber Vergleichsbeispiel 1 nicht geändert.

### Beispiel 4

Es wurde eine Folie wie in Vergleichsbeispiel 1 beschrieben hergestellt. Im Unterschied zu Vergleichsbeispiel 1 enthielt die Folie 1,0 Gew.-%, bezogen auf das Gewicht der Schicht, eine Kupferlegierung mit Zink als Goldpigment in der Deckschicht E. Die übrige Zusammensetzung und die Herstellbedingungen wurden gegenüber Vergleichsbeispiel 1 nicht geändert.

### Beispiel 5 (Variante Copoly Deckschicht)

Es wurde eine Folie wie in Vergleichsbeispiel 1 beschrieben hergestellt. Im Unterschied zu Vergleichsbeispiel 1 enthielt die Folie 0,8 Gew.-% Silberpigment bezogen auf die Schicht, in der Deckschicht A. Die weitere Zusammensetzung und Herstellbedingungen wurden gegenüber Vergleichsbeispiel 1 nicht geändert.

Die nach den Beispielen und Vergleichsbeispielen hergestellten Folien wurden auf einer Metallplatte in zwei Lagen übereinandergelegt. Dabei wurden die Folienlagen so angeordnet, daß die direkt auf der Metallplatte befindliche Folie mit der unpigmentierten Deckschicht (Deckschicht A für VB 1 bis 3 und Beispiel 1 bis 4; Deckschicht E für Beispiel 5) auf der Metallplatte lag und die gegenüberliegende pigmentierte Deckschicht mit der zweiten Folienlage in Berührung stand. Die zweite Folienlage aus der gleichen Folie wurde so angeordnet, daß sich deren pigmentierte Deckschicht in Kontakt mit der pigmentierten Deckschicht der ersten Folienlage befand. Somit kamen die beiden pigmenthaltigen Deckschichten aufeinander zu liegen. Zusätzlich wurde auf die beiden Folienlagen eine transparente Polyethylenplatte aufgelegt, welche die beiden Folienlagen leicht aneinander preßte. Diese Anordnung wurde dann sowohl mittels eines Dioden-Lasers bei einer Wellenlänge von 980 nm und einer Laserleistung von 15 bis 25 W kontinuierlich als auch mittels eines CO₂-Lasers (10600 nm) mit einer Leistung von ca. 50 bis 80 W mit einer Pulsdauer von 10 bis 14 µs bestrahlt. Während der Bestrahlung wurden die Folienlagen mit einer konstanten Geschwindigkeit unter leichtem Andruck durch die beiden Platten gezogen. Die Geschwindigkeit wurde in einem Bereich von 0,4 - 4 m/min variiert.

Bei Verwendung eines CO₂-Lasers wurde bei allen Folien eine strichförmige Siegelnaht mit guter Festigkeit gebildet. Zugleich ist eine Deformation der Siegelnaht, erzeugt durch ein Aufschmelzen der gesamten Folie, und eine Schädigung der Folienoberfläche erkennbar.

Die Bestrahlung mit einem Diodenlaser bewirkte bei den mit Ruß und Aluminium pigmentierten Folien nach den Beispielen ebenfalls eine strichförmige "Siegelnaht", während bei den Proben nach den Vergleichsbeispielen der Laserstrahl die Folien passierte ohne einen erkennbaren Effekt zu erzeugen. Eine etwas erhöhte Laserleistung war notwendig, um bei den Folien nach Beispiel 5 eine ausreichend feste Siegelnaht zu erzeugen. Der Vergleich von Beispiel 3 mit Beispiel 5 zeigt, daß durch die Verwendung eines höher schmelzenden Siegelrohstoffs (Copolymer) eine höhere Laserenergie notwendig ist, um eine spezifizierte Siegelnahtfestigkeit zu erreichen.

Im einzelnen wurde festgestellt, daß die Folien nach den Beispielen eine gute Haftfestigkeit im verschweißten Bereich zeigten. Durch geringe Veränderungen der Schiebegeschwindigkeit der Folien konnte eine Variation der Siegelnahtbreite erzielt werden.

## Patentansprüche

1. Verpackung aus einer mehrschichtigen orientierten Polyolefinfolie, die eine Basisschicht und mindestens eine erste Deckschicht umfaßt, die einen Zusatzstoff enthält, welcher im Wellenlängenbereich von Lasern eine derartige Absorption aufweist, daß es bei lokaler Bestrahlung der Folie mit einem Laser zu einer derartigen Temperaturerhöhung im Bereich der Bestrahlung kommt, daß das Polyolefin der ersten Deckschicht, in diesem im bestrahlten Bereich erweicht oder aufschmilzt und sich beim Abkühlen mit einer weiteren Schicht verbindet, **dadurch gekennzeichnet, daß** der Zusatzstoff in einer Menge von 0,01 bis 10 Gew.-%, bezogen auf das Gewicht der ersten Deckschicht, enthalten ist und der mittlere Teilchendurchmesser 0,01 bis 4 µm beträgt.

2. Verpackung nach Anspruch 1, **dadurch gekennzeichnet, daß** die Deckschicht mindestens 80 Gew.-% eines Propylenpolymeren, vorzugsweise eines Ethylen-Propylen-Copolymeren oder eines Terpolymeren enthält.

3. Verpackung nach einem oder mehreren der Ansprüche 1 bis 3, **dadurch gekennzeichnet, daß** die Dicke der ersten Deckschicht 0,1 bis 5 µm beträgt.

4. Verpackung gemäß einem oder mehreren der Ansprüche 1 bis 3, **dadurch gekennzeichnet, daß** der Zusatzstoff ein laserabsorbierendes Metall-, Schwarz- oder Buntpigment ist.

5. Verpackung nach einem oder mehreren der Ansprüche 1 bis 4, **dadurch gekennzeichnet, daß** die Folie transparent ist.

6. Verpackung gemäß einem oder mehreren der Ansprüche 1 bis 4, **dadurch gekennzeichnet**, die Folie eine opake Basisschicht aufweist, welche vakuoleninitierende Füllstoffe enthält.

7. Verpackung gemäß Anspruch 6, **dadurch gekennzeichnet, daß** die Basisschicht Füllstoffe in einer Menge von bis zu 40 Gew.-% enthält.

8. Verpackung gemäß Anspruch 7, **dadurch gekennzeichnet, daß** die Füllstoffe CaCO₃, TiO₂, Polyethylen- oder Polybutylenterephtalat sind.

9. Verpackung gemäß Anspruch 6 **dadurch gekennzeichnet, daß** die erste Deckschicht zusätzlich ein Weißpigment, vorzugsweise TiO₂, enthält.

10. Verpackung gemäß einem oder mehreren der Ansprüche 1 bis 9, **dadurch gekennzeichnet, daß** die Folie auf der gegenüberliegenden Seite eine zweite Deckschicht aufweist, welche einen Zusatzstoff enthält, welcher Strahlung im Wellenlängenbereich eines Lasers absorbiert, wobei die Zusatzstoffe dieser zweiten Deckschicht in einem anderen Wellenlängenbereich als die Zusatzstoffe der ersten Deckschicht absorbieren.

11. Verpackung gemäß einem oder mehreren der Ansprüche 1 bis 10, **dadurch gekennzeichnet, daß** die Folie nur in der ersten Deckschicht und in keiner weiteren Schicht einen Zusatzstoff enthält, welcher Strahlung im Wellenlängenbereich eines Lasers absorbiert.

12. Verfahren zur Herstellung einer Verpackung aus einer mehrschichtigen orientierten Polyolefinfolie, die eine Basisschicht und mindestens eine erste Deckschicht umfaßt, die einen Zusatzstoff enthält, welcher im Wellenlängenbereich von Lasern absorbiert, bei dem die Polyolefinfolie derart mit einem Laser bestrahlt wird, daß es zu einer lokalen Temperaturerhöhung im Bereich der Bestrahlung kommt und das Polyolefin der ersten Deckschicht, in diesem bestrahlten Bereich erweicht oder aufschmilzt und sich beim Abkühlen mit einer weiteren Schicht verbindet, **dadurch gekennzeichnet, daß** der Zusatzstoff in einer Menge von 0,01 bis 10 Gew.-%, bezogen auf das Gewicht der ersten Deckschicht, enthalten ist und der mittlere Teilchendurchmesser 0,01 bis 4 µm beträgt.

13. Verfahren zur Herstellung einer Verpackung nach Anspruch 12 aus einer mehrschichtigen orientierten Polyolefinfolie, die eine Basisschicht und mindestens eine erste Deckschicht umfaßt, die einen Zusatzstoff enthält, welcher im Wellenlängenbereich von Lasern absorbiert und die Polyolefinfolie derart mit einem Laser bestrahlt wird, daß es zu einer lokalen Temperaturerhöhung im Bereich der Bestrahlung kommt und das Polyolefin der ersten Deckschicht, in diesem bestrahlten Bereich erweicht oder aufschmilzt und sich beim Abkühlen mit einer weiteren Schicht verbindet, **dadurch gekennzeichnet, daß** die Polyolefinfolie eine zweite gegenüberliegende Deckschicht aufweist und in dieser zweiten Deckschicht einen Zusatzstoff aufweist, welcher im Wellenlängenbereich eines Lasers absorbiert und mittels eines Laser mit einem ersten Wellenlängenbereich eine Naht zum Verschließen der Verpackung erzeugt wird und mittels eines zweiten Lasers mit einem anderen Wellenlängenbereich, welcher von dem des ersten Lasers verschieden ist, die Folie markiert und/oder geschnitten und/oder perforiert wird.

14. Verfahren nach Anspruch 13, **dadurch gekennzeichnet, daß** man die Bearbeitung mittels mehrerer Laser mit verschiedenen Wellenlängen gleichzeitig durchführt.

15. Verfahren zur Herstellung einer Verpackung, aus einem Behältnis mit einem Deckel, wobei der Deckel auf einem Behälterrand aufliegt und wobei dieser Deckel aus einer mehrschichtigen, orientierten Polyolefinfolie ist, wobei die Folie eine Basisschicht und mindestens eine erste Deckschicht umfaßt und wobei sich diese erste Deckschicht in Kontakt mit dem Behälterrand befindet und die Folie in der ersten Deckschicht einen Zusatzstoff enthält, welcher im Wellenlängenbereich von Lasern absorbiert und die Polyolefinfolie derart mit einem Laser bestrahlt wird, daß es zu einer derartigen Temperaturerhöhung im Bereich der Bestrahlung kommt und das Polyolefin der ersten Deckschicht, in diesem bestrahlten Bereich erweicht oder aufschmilzt und sich beim Abkühlen mit dem Behälterrand verbindet, **dadurch gekennzeichnet, daß** der Zusatzstoff in einer Menge von 0,01 bis 10 Gew.-%, bezogen auf das Gewicht der ersten Deckschicht, enthalten ist und der mittlere Teilchendurchmesser 0,01 bis 4 µm beträgt.

16. Verfahren nach einem der Ansprüche 12, 14 oder 15, **dadurch gekennzeichnet, daß** die erste Deckschicht mindestens 80 Gew.-% eines Propylen Co- oder Terpolymeren oder eines Propylen Homopolymeren enthält.

17. Verfahren nach Anspruch 16, **dadurch gekennzeichnet, daß** die Propylen Co- oder Terpolymeren einen Schmelzpunkt im Bereich von 120 bis 140°C haben.

18. Verfahren nach einem der Ansprüche 12, 14, 15, 16 oder 17, **dadurch gekennzeichnet, daß** die Basisschicht der Polyolefinfolie mindestens 50 Gew.-% eines Propylenpolymeren enthält.

19. Verfahren nach einem der Ansprüche 12, 14, 15, 16, 17 oder 18, **dadurch gekennzeichnet, daß** die Folie drei-, vier-, oder fünfschichtig aufgebaut ist.

20. Verfahren nach einem der Ansprüche 12, 14, 15, 16 oder 17, **dadurch gekennzeichnet, daß** die Gesamtdicke der Folie 5 bis 80 µm beträgt.

21. Mehrschichtige orientierte Polyolefinfolie, die eine Basisschicht und mindestens eine erste Deckschicht umfaßt, **dadurch gekennzeichnet, daß** die erste Deckschicht ein Pigment aus einer Kupferlegierung enthält.

22. Mehrschichtige orientierte Polyolefinfolie nach Anspruch 21, **dadurch gekennzeichnet, daß** die Kupferlegierung eine Kupfer-Zinklegierung ist und das Pigment in einer Menge von 0,5 bis 3 Gew.-% bezogen auf das Gewicht der Deckschicht ist.

## Claims

1. Packaging comprising a multilayered oriented polyolefin film which includes a base layer and at least one first top layer comprising an additive which has an absorption in the wavelength range of lasers such that, on local irradiation of the film with a laser, a temperature increase occurs in the region of the irradiation such that the polyolefin of the first top layer softens or melts in this irradiated region and bonds to a further layer on cooling, **characterized in that** the additive is present in an amount of from 0.01 to 10% by weight, based on the weight of the first top layer, and the mean particle diameter is from 0.01 to 4 µm.

2. Packaging according to Claim 1, **characterized in that** the top layer comprises at least 80% by weight of a propylene polymer, preferably of an ethylene-propylene copolymer or of a terpolymer.

3. Packaging according to one or more of Claims 1 to 3, **characterized in that** the thickness of the first top layer is from 0.1 to 5 µm.

4. Packaging according to one or more of Claims 1 to 3, **characterized in that** the additive is a laser-absorbent metal, black or coloured pigment.

5. Packaging according to one or more of Claims 1 to 4, **characterized in that** the film is transparent.

6. Packaging according to one or more of Claims 1 to 4, **characterized in that** the film has an opaque base layer which comprises vacuole-initiating fillers.

7. Packaging according to Claim 6, **characterized in that** the base layer comprises fillers in an amount of up to 40% by weight.

8. Packaging according to Claim 7, **characterized in that** the fillers are CaCO₃, TiO₂, polyethylene terephthalate or polybutylene terephthalate.

9. Packaging according to Claim 6, **characterized in that** the first top layer additionally comprises a white pigment, preferably TiO₂.

10. Packaging according to one or more of Claims 1 to 9, **characterized in that** the film has on the opposite side a second top layer comprising an additive which absorbs radiation in the wavelength range of a laser, where the additives in this second top layer absorb in a different wavelength range to the additives in the first top layer.

11. Packaging according to one or more of Claims 1 to 10, **characterized in that** only the first top layer and no other layer of the film comprises an additive which absorbs radiation in the wavelength range of a laser.

12. Process for the production of packaging made from a multilayered oriented polyolefin film which includes a base layer and at least one first top layer comprising an additive which absorbs in the wavelength range of lasers, in which the polyolefin film is irradiated with a laser in such way that a local temperature increase occurs in the region of the irradiation and the polyolefin of the first top layer softens or melts in this irradiated region and bonds to a further layer on cooling, **characterized in that** the additive is present in an amount of from 0.01 to 10% by weight, based on the weight of the first top layer, and the mean particle diameter is from 0.01 to 4 µm.

13. Process for the production of packaging according to Claim 12 made from a multilayered oriented polyolefin film which includes a base layer and at least one first top layer comprising an additive which absorbs in the wavelength range of lasers and the polyolefin film is irradiated with a laser in such way that a local temperature increase occurs in the region of the irradiation and the polyolefin of the first top layer softens or melts in this irradiated region and bonds to a further layer on cooling, **characterized in that** the polyolefin film has a second opposite top layer and has in this second top layer an additive which absorbs in the wavelength range of a laser, and a seam for sealing the packaging is produced by means of a laser having a first wavelength range, and the film is marked and/or cut and/or perforated by means of a second laser having a different wavelength range which is different from that of the first laser.

14. Process according to Claim 13, **characterized in that** the treatment is carried out simultaneously by means of a plurality of lasers having different wavelengths.

15. Process for the production of packaging comprising a container with a lid, where the lid lies on a container edge and where this lid is made from a multilayered, oriented polyolefin film, where the film includes a base layer and at least one first top layer and where this first top layer is in contact with the container edge and the film comprises in the first top layer an additive which absorbs in the wavelength range of lasers and the polyolefin film is irradiated with a laser in such a way that a temperature increase occurs in the region of the irradiation such that the polyolefin of the first top layer softens or melts in this irradiated region and bonds to the container edge on cooling, **characterized in that** the additive is present in an amount of from 0.01 to 10% by weight, based on the weight of the first top layer, and the mean particle diameter is from 0.01 to 4 µm.

16. Process according to one of Claims 12, 14 or 15, **characterized in that** the first top layer comprises at least 80% by weight of a propylene copolymer or terpolymer or of a propylene homopolymer.

17. Process according to Claim 16, **characterized in that** the propylene copolymers or terpolymers have a melting point in the range from 120 to 140°C.

18. Process according to one of Claims 12, 14, 15, 16 or 17, **characterized in that** the base layer of the polyolefin film comprises at least 50% by weight of a propylene polymer.

19. Process according to one of Claims 12, 14, 15, 16, 17 or 18, **characterized in that** the film has a three-, four- or five-layered structure.

20. Process according to one of Claims 12, 14, 15, 16 or 17, **characterized in that** the total thickness of the film is from 5 to 80 µm.

21. Multilayered oriented polyolefin film which includes a base layer and at least one first top layer, **characterized in that** the first top layer comprises a pigment comprising a copper alloy.

22. Multilayered oriented polyolefin film according to Claim 21, **characterized in that** the copper alloy is a copper-zinc alloy, and the pigment is present in an amount of from 0.5 to 3% by weight, based on the weight of the top layer.

## Revendications

1. Emballage constitué par un film de polyoléfine multicouches orienté qui comprend une couche de base et au moins une première couche de surface qui contient un additif, lequel fait état d'une absorption telle dans le spectre de longueurs d'onde de lasers que lorsque le rayon laser frappe localement la couche, il se produit dans la zone touchée par le rayonnement une hausse de température telle que la polyoléfine de la première couche de surface ramollit ou fond dans cette zone touchée par le rayon et se lie avec une autre couche en refroidissant, **caractérisé en ce que** l'additif est contenu dans une quantité de 0,01 à 10 % en poids, rapporté au poids de la première couche de surface et le diamètre de particule moyen est de 0,01 à 4 µm.

2. Emballage selon la revendication 1, **caractérisé en ce que** la couche de surface contient au moins 80 % en poids d'un polymère de propylène, de préférence d'un copolymère d'éthylène-propylène ou d'un terpolymère.

3. Emballage selon l'une ou plusieurs des revendications 1 à 3, **caractérisé en ce que** l'épaisseur de la première couche de surface est de 0,1 à 5 µm.

4. Emballage selon l'une ou plusieurs des revendications 1 à 3, **caractérisé en ce que** l'additif est un pigment métallique, un pigment noir ou un pigment de couleur absorbant le laser.

5. Emballage selon l'une ou plusieurs des revendications 1 à 4, **caractérisé en ce que** le film est transparent.

6. Emballage selon l'une ou plusieurs des revendications 1 à 4, **caractérisé en ce que** le film fait état d'une couche de base opaque qui contient des matières de charge initiant des vacuoles.

7. Emballage selon la revendication 6, **caractérisé en ce que** la couche de base contient des matières de charge dans une quantité pouvant aller jusqu'à 40 % en poids.

8. Emballage selon la revendication 7, **caractérisé en ce que** les matières de charge sont du CaCO₃, du TiO₂, du téréphtalate de polyéthylène ou du téréphtalate de polybutylène.

9. Emballage selon la revendication 6, **caractérisé en ce que** la première couche de surface contient additionnellement un pigment blanc, de préférence du TiO₂.

10. Emballage selon l'une ou plusieurs des revendications 1 à 9, **caractérisé en ce que** le film fait état, sur la face opposée, d'une deuxième couche de surface qui contient un additif, lequel absorbe un rayonnement dans le spectre de longueurs d'ondes d'un laser, les additifs de cette deuxième couche de surface absorbant le rayonnement dans un autre spectre de longueurs d'ondes que les additifs de la première couche de surface.

11. Emballage selon l'une ou plusieurs des revendications 1 à 10, **caractérisé en ce que** le le film contient un additif seulement dans la première couche de surface et dans aucune autre couche, lequel absorbe un rayonnement dans le spectre de longueur d'ondes d'un laser.

12. Procédé destiné à la fabrication d'un emballage constitué par un film de polyoléfine multicouches orienté qui comporte une couche de base et au moins une première couche de surface qui contient un additif, lequel absorbe un rayonnement dans le spectre de longueurs d'ondes de lasers, procédé par lequel le film de polyoléfine est touché par un rayon laser de telle sorte qu'il se produit une hausse locale de température dans la zone touchée par le rayon et la polyoléfine de la première couche de surface ramollit ou fond et se lie avec une autre couche en refroidissant, **caractérisé en ce que** l'additif est contenu dans une quantité de 0,01 à 10 % en poids, rapporté au poids de la première couche de surface et le diamètre de particule moyen est de 0,01 à 4 µm.

13. Procédé destiné à la fabrication d'un emballage selon la revendication 12 constitué par un film de polyoléfine multicouches orienté qui comporte une couche de base et au moins une première couche de surface qui contient un additif, lequel absorbe un rayonnement dans le spectre de longueurs d'ondes de lasers et le film de polyoléfine est touché par un rayon laser de telle sorte qu'il se produit une hausse de température locale dans la zone du rayonnement et la polyoléfine de la première couche de surface dans cette zone touchée par le rayon ramollit ou fond et se lie avec une autre couche en refroidissant, **caractérisé en ce que** le film de polyoléfine présente une deuxième couche de surface sur la face opposée et que dans cette deuxième couche de surface il est fait état d'un additif qui absorbe un rayonnement dans le spectre de la longueur d'ondes d'un laser et à l'aide d'un laser, dans un premier spectre de longueur d'ondes, est produite une jointure de scellage destinée à la fermeture de l'emballage et à l'aide d'un deuxième laser, avec un autre spectre de longueur d'ondes qui est différent de celui du premier laser, le film reçoit un marquage et/ou une découpe et/ou est perforé.

14. Procédé selon la revendication 13, **caractérisé en ce que** l'on effectue le traitement simultanément à l'aide de plusieurs lasers de différentes longueurs d'ondes.

15. Procédé destiné à la fabrication d'un emballage constitué par un contenant avec un couvercle, le couvercle prenant appui sur un bord du contenant et ce couvercle consistant en un film de polyoléfine multicouches orienté, le film comportant une couche de base et au moins une première couche de surface, cette première couche de surface se trouvant en contact avec le bord du contenant et le film contenant dans la première couche de surface un additif qui absorbe un rayonnement dans le spectre de longueur d'ondes de lasers et le film de polyoléfine est frappé par un rayonnement avec un laser de telle sorte qu'il se produit une hausse de température dans la zone du rayonnement et la polyoléfine de la première couche de surface dans cette zone touchée par le rayon se,ramollit ou fond et se lie en refroidissant avec le bord du contenant, **caractérisé en ce que** l'additif est contenu dans une quantité de 0,01 à 10 % en poids, rapporté au poids de la première couche de surface et le dimètre de particule moyen est de 0,01 à 4 µm.

16. Procédé selon l'une ou l'autre des revendications 12, 14 ou 15, **caractérisé en ce que** la première couche de surface contient au moins 80 % en poids d'un copolymère ou d'un terpolymère de propylène ou d'un homopolymère de propylène.

17. Procédé selon la revendication 16, **caractérisé en ce que** les copolymères ou les terpolymères de propylène ont un point de fusion dans une plage de 120 à 140 °C.

18. Procédé selon l'une ou l'autre des revendications 12, 14, 15, 16 ou 17, **caractérisé en ce que** la couche de base du film de polyoléfine contient au moins 50 % en poids d'un polymère de propylène.

19. Procédé selon l'une ou l'autre des revendications 12, 14, 15, 16, 17 ou 18, **caractérisé en ce que** le film a une structure en trois, quatre ou cinq couches.

20. Procédé selon l'une ou l'autre des revendications 12, 14, 15, 16 ou 17, **caractérisé en ce que** l'épaisseur totale du film est de 5 à 80 µm.

21. Film de polyoléfine multicouches orienté comprenant une couche de base et au moins une couche de surface, **caractérisé en ce que** la première couche de surface contient un pigment qui se compose d'un alliage de cuivre.

22. Film de polyoléfine multicouches orienté selon la revendication 21, **caractérisé en ce que** l'alliage de cuivre est un alliage de cuivre et de zinc et le pigment est contenu dans une quantité de 0,5 à 3 % en poids, rapporté au poids de la couche de surface.
